# EUROPÄISCHE PATENTSCHRIFT

(11) **EP 0 932 346 B1**
(45) Veröffentlichungstag und Bekanntmachung des Hinweises auf die Patenterteilung: **31.07.2002**
(21) Anmeldenummer: 97912093.8
(22) Anmeldetag: 01.10.1997
(51) Int. Cl.: A44B 18/00

(54) **VERFAHREN UND VORRICHTUNG ZUR HERSTELLUNG EINES HAFTVERSCHLUSSTEILS AUS THERMOPLASTISCHEM KUNSTSTOFF**
METHOD AND DEVICE FOR PRODUCING A HOOK-AND-PILE TYPE CLOSURE PART FROM THERMOPLASTIC PLASTICS
PROCEDE ET DISPOSITIF POUR PRODUIRE UNE PIECE DE FERMETURE ADHESIVE EN THERMOPLASTIQUE

(30) Priorität: 09.11.1996 DE 19646318
(43) Veröffentlichungstag der Anmeldung: 04.08.1999
(73) Patentinhaber: Gottlieb Binder GmbH & Co., 71088 Holzgerlingen (DE)
(72) Erfinder: HAMMER, Pavel, D-72116 Mössingen (DE)
(74) Vertreter: Patentanwälte Bartels und Partner
(86) Internationale Anmeldenummer: EP9705412
(87) Internationale Veröffentlichungsnummer: WO9820767

(56) Entgegenhaltungen:
- EP-A- 0 661 007
- WO-A-94/29070
- US-A- 3 399 425
- US-A- 4 165 960
- US-A- 5 057 259
- PATENT ABSTRACTS OF JAPAN vol. 8, no. 160 (M-312), 25.Juli 1984 & JP 59 056993 A (YOSHIDA KOGYO KK), 2.April 1984,

## Beschreibung

Die Erfindung betrifft ein Verfahren und eine Vorrichtung zur Herstellung eines Haftverschlußteils mit einer Vielzahl von einstückig mit einem Träger ausgebildeten Verhakungsmitteln in Form von Verdickungen aufweisenden Stengeln, bei dem ein thermoplastischer Kunststoff in plastischem oder flüssigem Zustand dem Spalt zwischen einer Druckwalze und einer Formwalze zugeführt wird, wobei die Formwalze mit nach außen und innen offenen Hohlräumen versehen ist und beide Walzen in entgegengesetztem Drehsinn angetrieben werden, so daß der Träger im Spalt zwischen den Walzen gebildet wird.

Ein solches Verfahren ist aus dem Stand der Technik insbesondere durch die WO 94/23 610 der Minnesota Mining and Manufacturing Company bekannt. Bei dem darin ebenso wie bei dem aus der US-P-3,270,408 bekannten Herstellungsverfahren werden zunächst stiftförmige Gebilde hergestellt, deren Enden in einem zweiten Arbeitsgang zu Pilzen umgeformt werden Aus der US-P-3,196,490 sind Pilzköpfe mit abgeflachten Kopfteilen bekannt. Als Anwendungsmöglichkeit eines solcher Art hergestellten Haftverschlußteils wird insbesondere die Bildung eines Haftverschlusses für Babywindeln oder für Krankenhauskleidung offenbart.

Um Haftverschlußteile herzustellen, die in Haftverschlüssen derartiger Kleidungsstücke verwendet werden können, benötigt man eine relativ hohe Anzahl von Verhakungsmitteln pro cm², was bei der im Stand der Technik zur Bildung der Verhakungsmittel verwendeten Formwalze zu hohen Kosten führt. Bei der Herstellung dieser Formwalze muß zunächst eine der Anzahl der Verhakungsmittel entsprechende Anzahl von offenen Hohlräumen aufwendig aufgeprägt werden. Zusätzlich muß eine Vakuumvorrichtung integriert werden, die einer molekularen Orientierung der Stengel der Hohlräume dient. Während des Betriebes muß die Formwalze auf eine definierte Temperatur gekühlt werden. Außer der Herstellung der Stengel ist ein zweiter Arbeitsvorgang notwendig, um an den orientierten Stengeln durch Kontakt mit einer beheizten Walze Pilzköpfe zu formen.

Ein weiterer Nachteil des bekannten Verfahrens besteht darin, daß der den thermoplastischen Kunststoff enthaltende Extruderkopf sehr genau gegenüber der Formwalze einjustiert werden muß, um einen flachen Träger mit einer so geringen Dicke zu erhalten, wie dies beispielsweise für die Verwendung bei Haftverschlüssen in Babywindeln erforderlich ist. Das bedeutet, daß beispielsweise jedes neue Beladen des Extruderkopfes zu einer Dejustierung des Extruderkopfes relativ zur Formwalze und damit zu einer Produktionsunterbrechung führen kann.

Die WO-A-94/29070 beschreibt ein durch Laserbearbeitung herstellbares Abform-Werkzeug zur Herstellung von daran abformbaren Werkstücken aus Kunststoff. Die Form wird durch Sacklöcher bildende Hohlräume in ein flächiges oder kreiszylindrisches Abform-Substrat eingebracht und die Abformung erfolgt unter Anpressen eines Druckstempels an das Abform-Substrat. Durch entsprechende, auf das Abformen folgende Nachbearbeitungsschritte können die abgeformten Werkstücke in ihrer Form weiter verändert werden.

Die US-A-3,399,425 beschreibt eine Vorrichtung zur formung von Materialoberflächen und unter anderem zur Formung von Verhakungsmitteln in Form von ausgehend von einem Träger konisch sich verjüngenden und am trägerfernen Ende sich kräuselnden Stengeln. Die Vorrichtung weist dabei eine Druck walze und eine ein Sieb mit nach außen und innen offenen, konisch sich verjüngenden Hohlräumen umfassende Formwalze auf, deren Innenseite mit einem gegenüber der Außenseite geringeren Druck beaufschlagt wird und die gekühlt werden kann.

Ausgehend von diesem bekannten Stand der Technik liegt daher der vorliegenden Erfindung die Aufgabe zugrunde, ein weniger aufwendiges und damit zugleich kostengünstigeres Verfahren zur Herstellung von Haftverschlußteilen aus thermoplastischem Kunststoff, die hierfür erforderliche Vorrichtung und einen mittels des Verfahrens und der Vorrichtung hergestellten Haftverschlußteil oder Haftverschluß bereitzustellen.

Gelöst wird diese Aufgabe durch die Merkmale des Anspruches 1. Dadurch, daß die Formwalze ein Sieb aufweist, dessen Hohlräume bzw. Löcher durch Ätzen, Galvanisieren oder mittels eines Lasers hergestellt worden sind, ist es möglich, für jeweils eine unterschiedliche Anzahl von erforderlichen Verhakungsmitteln pro cm² schnell ein entsprechendes Sieb für die Formwalze bereitzustellen, denn die Anzahl der gebildeten Verhakungsmittel wird durch die Maske des Siebes bestimmt. Dabei werden solche Siebe verwendet, wie sie im Prinzip aus der Druckindustrie bekannt sind.

Bei dem erfindungsgemäßen Verfahren wird ausgenutzt, daß bei durch Ätzen, Galvanisieren oder mittels Laser gebildeten Hohlräumen diese regelmäßig an ihren Begrenzungen nach innen verlaufende Radien aufweisen. Durch diese Radien werden automatisch beim Füllen der nach außen und innen offenen Hohlräume Stengel ausgebildet, die bereits Verdickungen in Form von Tellern aufweisen. Dadurch entfällt der zweite Arbeitsgang mit dem im Stand der Technik nachgeschaltet die Stengel mit Verdickungen versehen werden. Auch ein aufwendiges Kühlen der Formwalze entfällt, da das aus dem thermoplastischem Kunststoff gebildete Haftverschlußteil bereits von der Formwalze genommen wird, wenn der Kunststoff zumindest teilweise erhärtet ist.

Das erfindungsgemäße Verfahren kann grundsätzlich mit jedem thermoplastischem Kunststoff ausgeführt werden, wobei je nach Verwendungszweck vorzugsweise Polypropylen, Polyamid, Polyethylen verwendet werden. Auch Cobzw. Terpolymere, die einen oder mehrere der genannten thermoplastischen Kunststoffe enthalten, sind gut geeignet.

Ein weiterer Vorteil des erfindungsgemäßen Verfahrens ist, daß die Ausbildung der Verdickungen an den Stengeln ohne viel Aufwand ganz unterschiedlich gestaltet werden kann. So können die Verdickungen in Form von abgeflachten oder konkave Vertiefungen aufweisenden Pilzköpfen ausgebildet sein oder sie können die Form von Drei- bis Sechsecken aufweisen. Zusätzlich können die Drei- bis sechseckigen Verdickungen abgerundete Ecken aufweisen, was die Verhakungswahrscheinlichkeit vergrößert.

Erfindungsgemäß ist es erwünscht, Haftverschlußteile mit einer Trägerdicke von 0,05 bis 0,5 mm und einer Anzahl von Verhakungsmitteln in der Größenordnung von 50 bis 400 Verhakungsmitteln pro cm² herzustellen. Es ist aber grundsätzlich auch möglich, Träger bereitzustellen, die eine größere Dicke aufweisen und mit einer geringeren oder größeren als der angegebenen Anzahl an Verhakungsmitteln pro cm² versehen sind.

Gemäß einer Ausführungsform der Erfindung hat der Träger eine Dicke von 0,05 bis 0,3 mm, vorzugsweise 0,1 bis 0,2 mm und ist mit einer Anzahl von 200 bis 400, vorzugsweise 300 Verhakungsmitteln pro cm² versehen. Derart hergestellte Haftverschlußteile werden vorzugsweise für Baby- oder Inkontinenzwindeln im Erwachsenenbereich sowie Teppichbefestigungen eingesetzt.

Bei einer anderen Ausführungsform der Erfindung hat der Träger eine Dicke von 0,1 bis 0,5 mm, vorzugsweise 0,2 bis 0,3 mm und ist mit einer Anzahl von 20 bis 200, vorzugsweise 100 Verhakungsmitteln pro cm² versehen. Das so hergestellte Haftverschlußteil wird vorzugsweise für Schleifscheiben, Automobilsitze oder sonstige Anwendungen verwendet.

Die Erfindung betrifft auch ein Haftverschlußteil, das nach dem erfindungsgemäßen Verfahren hergestellt worden ist. Sie betrifft ferner einen Haftverschluß, der zumindest aus einem Haftverschlußteil besteht, welcher nach dem erfindungsgemäßen Verfahren hergestellt worden ist.

Die Erfindung betrifft auch eine Vorrichtung zur Herstellung eines erfindungsgemäßen Haftverschlußteiles, deren Formwalze ein Sieb aufweist, dessen Hohlräume durch Ätzen, Galvanisieren oder mittels eines Lasers hergestellt worden sind.

Gemäß einer bevorzugten Ausführungsform ist das Sieb der Formwalze vollständig aus Nickel gebildet.

Schutz wird ferner für eine erfindungsgemäße Formwalze beansprucht.

Im folgenden wird die Erfindung anhand von in der Zeichnung dargestellten Ausführungsbeispielen näher erläutert:

Es zeigen:
- Fig. 1: eine teilweise geschnittene Ansicht einer erfindungsgemäßen Vorrichtung zur Herstellung von Haftverschlußteilen,
- Fig. 2: eine Ansicht eines Siebes mit teilweise dargestellten Hohlräumen.
- Fig. 3: ein unvollständig dargestellter Schnitt durch die erfindungsgemäße Formwalze mit einem vergrößert dargestelltem Hohlraum,
- Fig. 3a: schematische und vergrößerte Darstellung eines durch den Hohlraum nach Fig. 3 gebildeten Verhakungsmittels,
- Fig. 4a bis 4f: schematische Aufsicht auf die erfindungsgemäße Formwalze mit unterschiedlichen Formen von Hohlräumen,
- Fig. 5: Schnitt durch einen Hohlraum mit schematischer Darstellung der Hohiraumbildung mittels Galvanisieren, Ätzen oder mittels Laser.

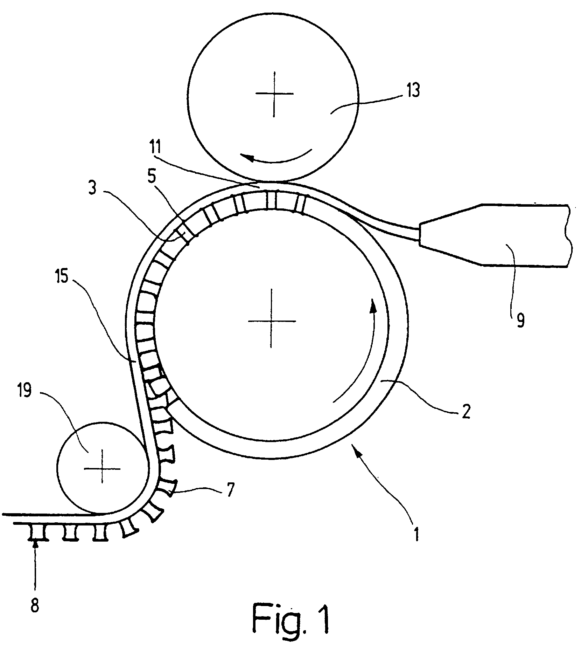

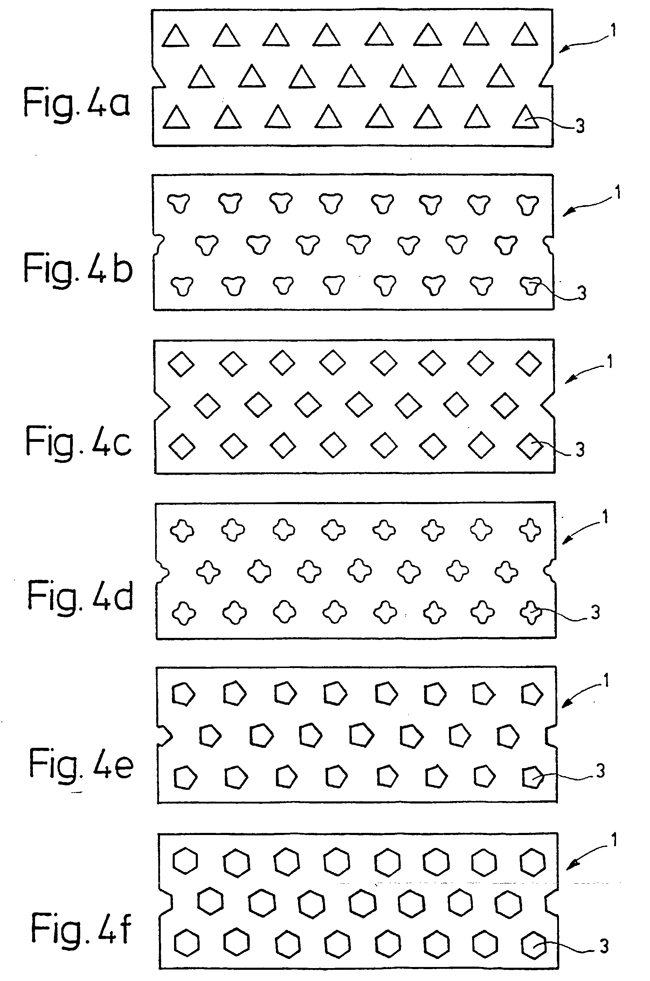

Fig. 1 zeigt eine insgesamt mit 1 bezeichnete Formwalze, auf die ein Sieb 2 aufgezogen ist, das ganz aus Nickel besteht. Das Sieb 2 der Formwalze 1 weist auf seinem gesamten Umfang Hohlräume 3 auf, die mittels eines galvanischen Verfahrens in an sich bekannter Weise hergestellt worden sind. Diese Hohlräume können eine im wesentlichen zylindrische Grundform aufweisen, wie dies gemäß Fig. 1 der Fall ist, es können aber auch beliebige andere Formen, die beispielsweise in den Figuren 4a bis 4f dargestellt sind, galvanisiert werden. Die Formwalze 1 hat im Ausführungsbeispiel einen äußeren Umfang von in etwa 640 mm. Die Länge der Formwalze 1 beträgt im Ausführungsbeispiel in etwa 1700 mm, wobei diese Abmessungen aber grundsätzlich je nach Bedarf beliebig gewählt werden können.

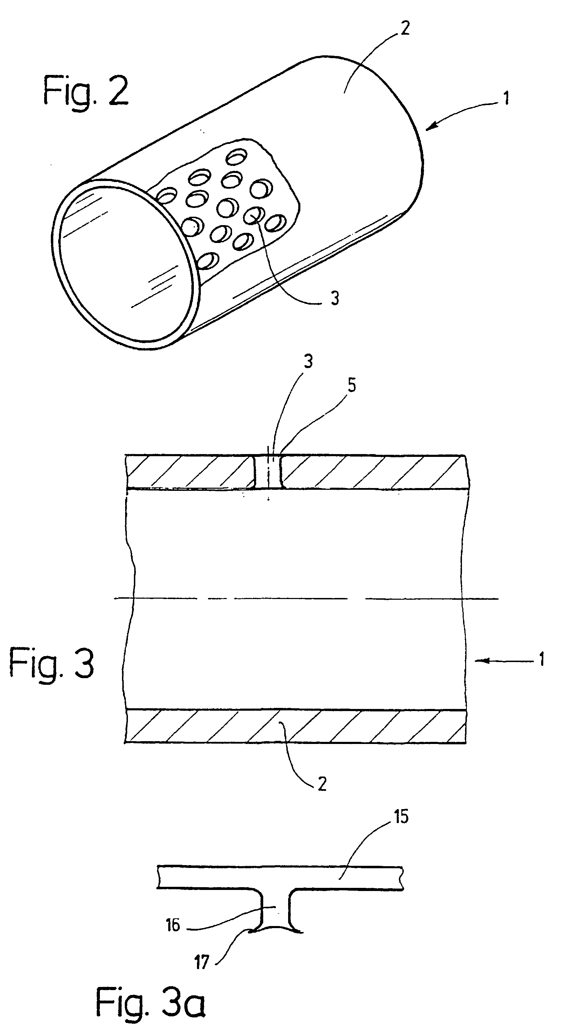

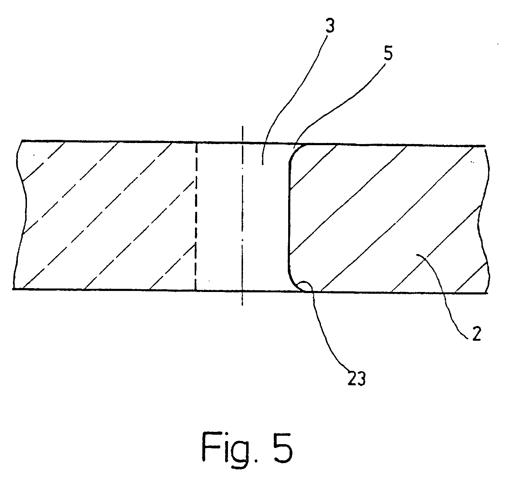

Durch das Galvanisieren der Hohlräume 3 erhalten diese eine in Fig. 3 an einem Hohlraum 3 exemplarisch dargestellte charakteristische Form, weil sich dort, wo sich die Hohlräume 3 nach außen bzw. nach innen öffnen, Erweiterungen der Hohlräume 5 bilden. Komplementär zur Bildung der Erweiterung 5 eines Hohlraumes ist die Bildung eines Radius 23 an der Kante des Siebes 2. In Fig. 5 ist in der linken Hälfte ein Hohlraum 3 dargestellt, wie er ohne Erweiterung 5 wäre, in der rechten Hälfte die tatsächliche Gestalt.

Diese Erweiterungen 5 werden nun ausgenutzt, um die als Ganzes mit 7 bezeichneten Verhakungsmittel eines Haftverschlußteiles 8 in nur einem Arbeitsgang herzustellen. Hierfür wird ein thermoplastischer Kunststoff in an sich bekannter Weise in plastischem oder flüssigem Zustand mittels einer Zuführeinrichtung 9 in Form eines Extruders dem Spalt 11 zwischen einer Druckwalze 13 und der Formwalze 1 zugeführt. Die Druckwalze 13 und die Formwalze 1 werden in entgegengesetztem Drehsinn angetrieben, so daß der aus dem Extruder freigesetzte thermoplastische Kunststoff in den Spalt 11 zwischen der Druckwalze 13 und der Formwalze 1 und dabei in die Hohlräume 3 fließt. Dabei bildet der sich im Spalt 11 befindliche thermoplastische Kunststoff einen Träger 15, mit dem die Verhakungsmittel 7 einstückig verbunden sind. Gleichzeitig bestimmt der Abstand zwischen der Druckwalze 13 und der Formwalze 1, d.h., die Breite des Spaltes 11, die Dicke des Trägers 15.

Die Verhakungsmittel 7 selbst werden dadurch gebildet, daß der thermoplastische Kunststoff in die offenen Hohlräume des Siebes der Formwalze 1 fließt. In Zusammenwirkung mit den durch das Galvanisieren wie oben beschrieben bedingten Erweiterungen 5 entstehen somit in den Hohlräumen 3 Verhakungsmittel 7, die einen durch den Hohlraum 3 gebildeten Stengel aufweisen, an dessen vom Träger 15 wegweisenden Ende ein allseitig verbreiteter Rand 17 in Form einer Verdickung ausgebildet ist, wie in Fig. 3a gezeigt. Dieser Rand 17 ist zur Verhakung mit Verhakungsmitteln eines weiteren Haftverschlußteiles geeignet, beispielsweise in Form eines Flausches, Velours oder Vlieses.

Des weiteren zeigt Fig. 3a, daß die Verhakungsmittel 7 an ihrer vom Träger 15 wegweisenden Begrenzung leichte Radien aufweisen. Diese Radien sind bedingt durch die Form der Hohlräume im Sieb. Die Begrenzungen der Verhakungsmittel können aber auch im wesentlichen eben ausgebildet sein. Bedingt dadurch, daß der thermoplastische Kunststoff über die nach außen weisenden Erweiterungen 5 der Hohlräume 3 des Siebes 2 der Formwalze 1 fließen muß, weisen die Verhakungsmittel 7 in der Regel dort, wo der Stengel 16 in den Träger 15 mündet, einen Radius auf. Die Höhe der Stengel 16 ist durch Änderung der Dicke auf des die Formwalze 1 aufgezogenen Siebes 2 beliebig einstellbar. Wenn Verhakungsmittel 7 gebildet werden sollen, die dreibis sechseckige Verdickungen aufweisen, ist es lediglich notwendig, die Hohlräume 3 in dieser drei- bis sechseckigen Form auszubilden, da sich beim Galvanisieren dieser Hohlräume 3 von selbst entsprechend ausgebildete Erweiterungen 5 an den nach außen und innen weisenden Enden der Hohlräume 3 bilden.

Nachdem der thermoplastische Kunststoff beim Fließen durch den Spalt 11 sowohl den Träger 15 als auch die Verhakungsmittel 7 gebildet hat, wird er nach ca. einer 2/3 bis 3/4 Umdrehung der Formwalze 1 durch eine in an sich bekannter Weise ausgebildete Umlenkeinrichtung 19 von der Formwalze als fertiges Haftverschlußteil 8 entnommen.

Sowohl das verwendete thermoplastische Kunststoffmaterial als auch die Dicke des Trägers 15 und die Anzahl der Verhakungsmittel 7 pro cm² sind je nach Verwendung der fertigen Haftverschlußteile 21 frei bestimmbar. Die so hergestellten Haftverschlußteile können z.B. im Babywindelbereich oder als Inkontinenzwindeln für Erwachsene verwendet werden. Dann wird als thermoplastisches Kunststoffmaterial Polypropylen, Polyethylen oder Mischungen dieser Kunststoffe eingesetzt, da diese Kunststoffmaterialien kostengünstig sind. Die Trägerdicke und damit der Abstand zwischen der Druckwalze 13 und der Formwalze 1 wird je nach Windeltyp im Bereich von 0,05 bis 0,3 mm gewählt, wobei eine Trägerdicke von 0,2 mm am häufigsten verwendet wird. Entsprechend wird die Anzahl der Verhakungsmittel 7 pro cm² gewählt und liegt im Bereich von 100 bis 400 Verhakungsmitteln 7 pro cm², wobei 200 Verhakungsmittel 7 pro cm² üblicherweise vorgesehen sind.

Ein weiterer Einsatzbereich der erfindungsgemäßen Haftverschlußteile 8 liegt in der Befestigung von Schleifscheiben und dergleichen. Dabei wird die Trägerdikke im Bereich von 0,1 bis 0,5 mm gewählt und beträgt typischerweise 0,2 bis 0,3 mm. Die Anzahl der Verhakungsmittel 7 pro cm² liegt im Bereich von 50 bis 200 Verhakungsmitteln 7 pro cm² und beträgt üblicherweise 100 Verhakungsmittel 7 pro cm².

Die Hohlräume 3 des auf die Formwalze 1 aufgezogenen Siebes können auch durch Behandlung mittels eines Lasers hergestellt werden.

Bei dem für die Herstellung der für Schleifscheiben oder sonstiger Arbeitsgeräte verwendeten Haftverschlußteile 8 ist die Hochwertigkeit des verwendeten Kunststoffmaterials, insbesondere dessen Temperaturbeständigkeit von Bedeutung. Daher werden hier bevorzugt Polyamid, insbesondere Polyamidgranulat oder Polyamid enthaltende Mischungen aus thermoplastischen Kunststoffen verwendet.

Die erfindungsgemäßen Haftverschlußteile können auch eingesetzt werden für großflächige Befestigungen wie Teppiche und Wandbezüge, für Sitzbezüge, Verpackungen, Fliegengitter und medizinische Anwendungen. Zersetzungsfähige Haftverschlußteile werden durch Einsatz von verrottbaren thermoplastischen Materialien erzielt. Die erfindungsgemäßen Haftverschlußteile sind noch in vielen anderen Bereichen einsetzbar, in denen ein preiswerter und/oder dünner Verschluß benötigt wird.

## Patentansprüche

1. Verfahren zur Herstellung eines Haftverschlußteiles (8) mit einer Vielzahl von einstückig mit einem Träger (15) ausgebildeten Verhakungsmitteln (7), bei dem ein thermoplastischer Kunststoff in plastischem oder flüssigem Zustand dem Spalt (11) zwischen einer Druckwalze (13) und einer Formwalze (1) zugeführt wird, und beide Walzen (1,13) in entgegengesetztem Drehsinn angetrieben werden, so daß der Träger (15) im Spalt (11) zwischen den Walzen (1,13) gebildet wird, wobei die Formwalze (1) ein Sieb (2) mit nach außen und innen offenen Hohlräumen aufweist, **dadurch gekennzeichnet, daß** die fertigen Verhakungsmittel (7) allein dadurch entstehen, daß der thermoplastische Kunststoff in den offenen Hohlräumen (3) des Siebes (2) der Formwalze (1) zumindest teilweise erhärtet, wobei
- die Hohlräume (3) des Siebes (2) durch Galvanisieren, Ätzen oder mittels eines Lasers hergestellt worden sind,
- die Verhakungsmittel (7) in Form von Verdickungen aufweisenden Stengeln (16) ausgebildet werden,
- und die Verdickungen der Stengel (16) in Form von abgeflachten oder konkave Vertiefungen aufweisenden Pilzköpfen oder tellerförmigen Köpfen ausgebildet werden.

2. Verfahren nach Anspruch 1, **dadurch gekennzeichnet, daß** als thermoplastischer Kunststoff Polypropylen, Polyamid, Polyethylen, sowie einen oder mehrere dieser Kunststoffe enthaltende Co- oder Terpolymere verwendet werden.

3. Verfahren nach Anspruch 1 oder 2, **dadurch gekennzeichnet, daß** die Hohlräume (3) des Siebes (2) eine im wesentlichen zylindrische Grundform aufweisen.

4. Verfahren nach einem der Ansprüche 1 bis 2, **dadurch gekennzeichnet, daß** die Verdickungen der Stengel (16) drei- bis sechseckig ausgebildet werden.

5. Verfahren nach Anspruch 4, **dadurch gekennzeichnet, daß** die Verdickungen mit abgerundeten Ecken ausgebildet werden.

6. Verfahren nach einem der Ansprüche 1 bis 5, **dadurch gekennzeichnet, daß** der Träger (15) in einer Dicke von 0,05 bis 0,5 mm ausgebildet und mit 50 bis 400 Verhakungsmitteln (7) pro cm² versehen wird.

7. Verfahren nach Anspruch 6, **dadurch gekennzeichnet, daß** der Träger (15) in einer Dicke von 0,05 bis 0,3 mm, vorzugsweise 0,1 bis 0,2 mm ausgebildet und mit 100 bis 400, vorzugsweise 200 Verhakungsmitteln (7) pro cm² versehen wird.

8. Verfahren nach Anspruch 6, **dadurch gekennzeichnet, daß** der Träger (15) in einer Dicke von 0,1 bis 0,5 mm, vorzugsweise 0,2 bis 0,3 mm ausgebildet und mit 50 bis 200, vorzugsweise 100 Verhakungsmitteln (7) pro cm² versehen wird.

9. Haftverschlußteil, hergestellt nach dem Verfahren nach einem der Ansprüche 1 bis 8.

10. Haftverschluß, bestehend aus zumindest einem Haftverschlußteil (8) nach Anspruch 9.

11. Vorrichtung zur Herstellung eines Haftverschlußteiles nach Anspruch 9, im wesentlichen bestehend aus einer Zuführeinrichtung (9) für einen thermoplastischen Kunststoff sowie einer Druckwalze (13) und einer Formwalze (1), die zueinander in einem definierten Abstand unter Ausbildung eines Spaltes (11) angeordnet sind, wobei die Formwalze (1) ein Sieb (2) aufweist, dessen Hohlräume (3) durch Galvanisieren, Ätzen oder mittels eines Lasers gebildet worden sind.

12. Vorrichtung nach Anspruch 11, **dadurch gekennzeichnet, daß** das Sieb (2) der Formwalze (1) vollständig aus Nickel gebildet ist.

13. Formwalze (1) für eine Vorrichtung zur Herstellung eines Haftverschlußteiles (8), ausgebildet gemäß einem der Ansprüche 11 oder 12.

## Claims

1. Method for producing an adhesion closure part (8) having a large number of hooking means (7) which are formed in one piece with a carrier (15), in which method a thermoplastic plastics is supplied in a plastic or fluid state to the gap (11) between a pressing roller (13) and a shaping roller (1), and the two rollers (1, 13) are driven in opposite directions of rotation so that the carrier (15) is formed in the gap (11) between the rollers (1, 13), the shaping roller (1) having a screen (2) comprising cavities that are open towards the outside and towards the inside, **characterised in that** the finished hooking means (7) are formed purely as a result of the fact that the thermoplastic plastics hardens, at least partially, in the open cavities (3) of the screen (2) of the shaping roller (1),
- the cavities (3) of the screen (2) having been produced by electroplating, etching or by means of a laser,
- the hooking means (7) being constructed in the form of stems (16) having thickened portions,
- and the thickened portions of the stems (16) being constructed in the form of mushroom heads that are flattened or that have concave depressions or being constructed in the form of plate-shaped heads.

2. Method according to claim 1, **characterised in that** polypropylene, polyamide, polyethylene, and co- or terpolymers comprising one or more of those plastics are used as the thermoplastic plastics.

3. Method according to claim 1 or 2, **characterised in that** the cavities (3) of the screen (2) have a substantially cylindrical basic form.

4. Method according to either claim 1 or claim 2, **characterised in that** the thickened portions of the stems (16) are constructed to have from 3 to 6 sides.

5. Method according to claim 4, **characterised in that** the thickened portions are constructed with rounded corners.

6. Method according to any one of claims 1 to 5, **characterised in that** the carrier (15) is constructed with a thickness of from 0.05 to 0.5 mm and is provided with from 50 to 400 hooking means (7) per cm².

7. Method according to claim 6, **characterised in that** the carrier (15) is constructed with a thickness of from 0.05 to 0.3 mm, preferably from 0.1 to 0.2 mm, and is provided with from 100 to 400, preferably 200, hooking means (7) per cm².

8. Method according to claim 6, **characterised in that** the carrier (15) is constructed with a thickness of from 0.1 to 0.5 mm, preferably from 0.2 to 0.3 mm, and is provided with from 50 to 200, preferably 100, hooking means (7) per cm².

9. Adhesion closure part, produced in accordance with the method according to any one of claims 1 to 8.

10. Adhesion closure, comprising at least one adhesion closure part (8) according to claim 9.

11. Device for producing an adhesion closure part according to claim 9, substantially comprising a supply device (9) for a thermoplastic plastics, and a pressing roller (13) and a shaping roller (1) which are arranged relative to one another at a defined distance with the formation of a gap (11), the shaping roller (1) having a screen (2) whose cavities (3) have been formed by electroplating, etching or by means of a laser.

12. Device according to claim 11, **characterised in that** the screen (2) of the shaping roller (1) is formed entirely from nickel.

13. Shaping roller (1) for a device for producing an adhesion closure part (8) constructed in accordance with either claim 11 or claim 12.

## Revendications

1. Procédé pour la fabrication d'une pièce de verrouillage adhésif (8) composée de multiples crochets (7) maintenus en une seule partie par un support (15), où une matière thermoplastique est acheminée à l'état plastique ou liquide à la fente (11) située entre un rouleau compresseur (13) et un rouleau moulant (1), et où les deux rouleaux (1,13) sont entraînés en sens inverse, si bien que le support (15) s'adapte dans la fente (11) située entre les rouleaux (1,13), où le rouleau moulant (1) présente un tamis (2) avec des espaces creux ouverts sur l'intérieur et l'extérieur, **caractérisé en ce que** les crochets (7) se forment tout seuls par le fait que la matière thermoplastique se durcit, au moins en partie, dans les espaces creux (3) situés dans le tamis (2) du rouleau moulant (1), où
- les espaces creux (3) du tamis sont obtenus par galvanisage, mordançage ou au moyen d'un laser,
- les crochets (7) se constituent sous forme de tiges (16) présentant des épaississements,
- et les épaississements des tiges (16) se constituent sous forme de têtes de champignon ou de têtes en forme d'assiette présentant des enfoncements aplatis ou concaves.

2. Procédé selon la revendication 1, **caractérisé en ce qu'**on peut utiliser comme matière thermoplastique du polypropylène, du polyamide, du polyéthylène ainsi qu'une ou plusieurs de ces matières contenant du co-polymère ou du ter-polymère.

3. Procédé selon revendication 1 ou 2, **caractérisé en ce que** les espaces creux (3) du tamis (2) présentent une forme fondamentale principalement cylindrique.

4. Procédé selon une des revendications de 1 à 2, **caractérisé en ce que** les épaississements des tiges (16) sont formés de trois à six angles.

5. Procédé selon revendication 4, **caractérisé en ce que** les épaississements sont constitués d'angles arrondis.

6. Procédé selon une des revendications de 1 à 5, **caractérisé en ce que** le support (15) a une épaisseur de 0,05 à 0,5 mm et est pourvu de 50 à 400 crochets (7) par cm².

7. Procédé selon revendication 6, **caractérisé en ce que** le support (15) a une épaisseur de 0,05 à 0,3 mm, de préférence 0,1 à 0,2 mm et est pourvu de 100 à 400 crochets (7), de préférence 200, par cm².

8. Procédé selon revendication 6, **caractérisé en ce que** le support (15) a une épaisseur de 0,1 à 0,5 mm, de préférence 0,2 à 0,3 mm et est pourvu de 50 à 200 crochets (7), de préférence 100, par cm².

9. Pièce de verrouillage adhésif, fabriquée selon le procédé énoncé dans une des revendications de 1 à 8.

10. Verrouillage adhésif composé au moins d'une pièce de verrouillage adhésif (8) selon revendication 9.

11. Dispositif pour la fabrication d'une pièce de verrouillage adhésif selon revendication 9, composé pour l'essentiel d'un dispositif d'alimentation (9) pour une matière thermoplastique ainsi que d'un rouleau compresseur (13) et d'un rouleau moulant (1), qui sont disposés l'un de l'autre à une distance définie par la formation d'une fente (11), où le rouleau moulant (1) présente un tamis (2), dont les espaces creux (3) peuvent être obtenus par galvanisage, mordançage ou au moyen d'un laser.

12. Dispositif selon revendication 11, **caractérisé en ce que** le tamis (2) du rouleau moulant (1) est tout en nickel.

13. Rouleau moulant (1) pour un dispositif de fabrication d'une pièce de verrouillage adhésif (8), constitué selon une des revendications 11 ou 12.
